# EUROPÄISCHE PATENTSCHRIFT

(11) **EP 3 052 799 B1**
(45) Veröffentlichungstag und Bekanntmachung des Hinweises auf die Patenterteilung: **15.11.2017**
(21) Anmeldenummer: 14786798.0
(22) Anmeldetag: 23.09.2014
(51) Int. Cl.: F02M 35/024, F02M 35/10, F02M 35/104, F02M 35/12, F02M 35/16, B60K 13/02, B60R 21/34, B62D 25/10

(54) **KRAFTFAHRZEUG**
MOTOR VEHICLE
VÉHICULE AUTOMOBILE

(30) Priorität: 04.10.2013 DE 102013016578
(43) Veröffentlichungstag der Anmeldung: 10.08.2016
(73) Patentinhaber: Audi AG, 85045 Ingolstadt (DE)
(72) Erfinder: KALAUCH, Gerd, 78727 Oberndorf (DE)
(86) Internationale Anmeldenummer: PCT/EP2014/002574
(87) Internationale Veröffentlichungsnummer: WO 2015/049036

(56) Entgegenhaltungen:
- EP-A2- 1 614 590
- DE-A1- 10 028 856
- DE-A1-102009 033 897
- FR-A1- 2 811 940
- FR-A1- 2 886 892
- FR-A3- 2 921 308
- JP-A- H11 343 938
- US-A1- 2003 062 013
- US-A1- 2004 226 772
- US-B1- 6 553 953

## Beschreibung

Die Erfindung betrifft ein Kraftfahrzeug mit einem mittels einer Motorhaube verschließbaren Motorraum, in dem eine unmittelbar oder mittelbar an ein Saugrohr einer Brennkraftmaschine strömungstechnisch anschließbare Luftansaugleitung angeordnet ist.

Das Kraftfahrzeug verfügt über den Motorraum, in welchem wenigstens ein Antriebsaggregat des Kraftfahrzeugs, beispielsweise also die Brennkraftmaschine, angeordnet ist. Dem Motorraum ist die Motorhaube zugeordnet, welche dazu dient, den Motorraum in wenigstens einer Richtung zu verschließen beziehungsweise in dieser Richtung von einer Außenumgebung des Kraftfahrzeugs abzugrenzen. Die Motorhaube ist dabei beispielsweise zumindest in einer Offenstellung und einer Geschlossenstellung anordenbar, wobei in der Offenstellung der Motorraum aus der Außenumgebung des Kraftfahrzeugs zugänglich ist. In der Geschlossenstellung der Motorhaube soll diese dagegen den Motorraum wenigstens bereichsweise abdecken.

Die Brennkraftmaschine, welche in dem Motorraum angeordnet sein kann, verfügt über eine Luftzuführeinrichtung, wobei das Saugrohr ein Bestandteil dieser Luftzuführeinrichtung ist. In dem Saugrohr ist beispielsweise eine Drosselklappe der Brennkraftmaschine angeordnet. An das Saugrohr ist strömungstechnisch die Luftansaugleitung anschließbare beziehungsweise angeschlossen. Über die Luftansaugleitung kann mithin dem Saugrohr und entsprechend der Brennkraftmaschine Luft, insbesondere Frischluft aus der Außenumgebung des Kraftfahrzeugs, zugeführt werden. Beispielsweise erstreckt sich die Luftansaugleitung von einer Einlassöffnung bis hin zu einer Auslassöffnung. Die Auslassöffnung ist dabei an das Saugrohr der Brennkraftmaschine anschließbar oder angeschlossen, insbesondere unmittelbar oder mittelbar, beispielsweise über einen Luftfilter der Luftzuführeinrichtung. Die Auslassöffnung ist von der Einlassöffnung beabstandet angeordnet, insbesondere liegt sie in Fahrtrichtung des Kraftfahrzeugs weiter vorne.

Die Luftansaugleitung sowie der Luftfilter sind hinsichtlich eines Fußgängeraufprallschutzes von besonderer Bedeutung, weil sie häufig auf der der Motorhaube zugewandten Seite der Brennkraftmaschine angeordnet sind. Aus der Druckschrift EP 2 165 068 B1 ist hierzu ein Aufpralldämpfer eines Kraftfahrzeugs zur Bildung eines Fußgängeraufprallschutzes bekannt. Dieser umfasst ein nachgiebiges, energieabsorbierendes Dämpfungsmaterial, wobei das Dämpfungsmaterial Teile eines Luftansaugsystems des Kraftfahrzeugs zumindest in einer senkrecht zur Außenhaut liegenden Aufprallrichtung umschließt.

Aus dem Stand der Technik ist weiterhin die Druckschrift DE 10 2009 033 897 A1 bekannt. Diese betrifft ein Kraftfahrzeug-Antriebsaggregat, das eine Brennkraftmaschine, einen Luftfilter und einen sich zwischen dem Luftfilter und der Brennkraftmaschine erstreckenden Luft-Strömungskanal umfasst. Der Luft-Strömungskanal umfasst wenigstens abschnittsweise einen radial inneren, zur Luftströmung in dem Luft-Strömungskanal hin freiliegenden luftdurchlässigen Schallabsorptionsbereich aus einem faserhaltigen Material und eine radial äußere luftundurchlässige Sperrschicht. Weiterhin sind aus dem Stand der Technik die Druckschriften DE 10 2004 032 597 A1, DE 103 39 614 A1, DE 10 2008 033 802 A1 sowie DE 35 36 379 A1 bekannt.

Es ist nun Aufgabe der Erfindung, ein Kraftfahrzeug vorzuschlagen, welches eine Luftansaugleitung aufweist, die verbesserte Eigenschaften aufweist, insbesondere hinsichtlich des Fußgängeraufprallschutzes und/oder der Akustik des Kraftfahrzeugs.

Dies wird erfindungsgemäß mit einem Kraftfahrzeug mit den Merkmalen des Anspruchs 1 erreicht. Dabei ist vorgesehen, dass die Luftansaugleitung ein Faserverbundelement aus einem luftdurchlässigen Faserverbundmaterial aufweist, wobei entlang der Luftansaugleitung Luft durch das Faserverbundelement in den luftführenden Innenraum der Luftansaugleitung eintreten kann, sodass auch bei verstopfter Einlassöffnung Luft durch die Auslassöffnung austreten kann.

Die Luftansaugleitung kann von angesaugter Luft durchströmt werden, wobei die Luftströmung insbesondere in einem luftführenden Innenraum der Luftansaugleitung vorliegt. Dabei kann beispielsweise das Faserverbundelement den Innenraum der Luftansaugleitung wenigstens bereichsweise oder auch vollständig umgreifen. Im Querschnitt - bezüglich der Längsmittelachse der Luftansaugleitung - betrachtet ist es also bevorzugt vorgesehen, dass das Faserverbundmaterial den luftführenden Innenraum der Luftansaugleitung wenigstens bereichsweise einschließt, insbesondere vollständig umgreift beziehungsweise einschließt, und insoweit die Luftansaugleitung mit ausbildet. Das Faserverbundmaterial liegt dabei - wiederum im Querschnitt gesehen - zwischen dem Innenraum der Luftansaugleitung und einer Umgebung beziehungsweise dem Motorraum vor.

Dabei ist das Faserverbundmaterial luftdurchlässig, dichtet insbesondere den Innenraum also zumindest nicht vollständig gegenüber der Außenumgebung beziehungsweise dem Motorraum ab. Bevorzugt weist das Faserverbundmaterial jedoch einen Durchlässigkeitsgrad auf, welcher sicherstellt, dass zumindest ein Großteil der aus der Auslassöffnung austretenden Luft, insbesondere die gesamte aus der Auslassöffnung austretende Luft, über die Einlassöffnung in den Innenraum gelangt. Vorzugsweise ist es also vorgesehen, dass keine Luft oder allenfalls ein geringer Anteil der durch die Auslassöffnung austretenden Luft durch das Faserverbundmaterial in den Innenraum gelangt. Die Luftdurchlässigkeit wird beispielsweise durch die Wahl eines porösen Faserverbundmaterials realisiert.

Die Luftdurchlässigkeit hat den Vorteil, dass auch bei verstopfter Einlassöffnung Luft durch die Auslassöffnung austreten kann, weil sie entlang der Luftansaugleitung durch das Faserverbundelement in den Innenraum eintreten kann. Ein derartiges Verstopfen der Einlassöffnung kann insbesondere durch äußere Einflüsse, beispielsweise Schneefall oder dergleichen auftreten.

Die Ausbildung des Faserverbundelements aus dem Faserverbundmaterial hat mehrere Vorteile. Zum einen ist das auf diese Art und Weise ausgebildete Faserverbundelementleicht verformbar, sodass bei einem Aufprall auf die Motorhaube beziehungsweise bei einer Verformung der Motorhaube die Luftansaugleitung beziehungsweise das Faserverbundelement ohne Weiteres zurücktreten kann, sobald die Motorhaube an der Luftansaugleitung anliegt und diese mit einer entsprechenden Kraft beaufschlagt. Somit kann ein derart verformbares Faserverbundelement einen bedeutenden Beitrag zum Fußgängerschutz leisten. Gleichzeitig ist das Faserverbundelement jedoch derart formstabil, dass es seine Form auch bei Vorliegen eines Betriebsdrucks in dem Innenraum zumindest weitestgehend, insbesondere vollständig, beibehält. Der Betriebsdruck ist üblicherweise geringer als der Druck in der Außenumgebung, ist also ein Unterdruck. Zudem wirkt das Faserverbundmaterial geräuschdämmend und/oder geräuschdämpfend, sodass zusätzlich oder alternativ die Akustik des Kraftfahrzeugs verbessert wird.

Beispielsweise wird als Faserverbundmaterial ein Faservliesverbundmaterial verwendet. Unter einem Faservlies ist ein textiles Flächengebilde aus Fasern zu verstehen, welches nur durch Faserhaftung zusammenhält. Ein solches Faservlies wird im Falle des Faservliesverbundmaterials als Faseranteil des Faserverbundmaterials verwendet. Neben dem Faseranteil weist das Faserverbundmaterial eine Matrix auf, welche in Form eines Thermoplasts vorliegt. Die Luftansaugleitung weist an ihrer Einlassöffnung und/oder ihrer Auslassöffnung jeweils eine Dichtung auf, welche beispielsweise in Form eines Dichtrings vorliegt, der vorzugsweise die jeweilige Öffnung in Umfangsrichtung vollständig umgreift. Die Dichtung ist an dem Faserverbundelement befestigt und kann insbesondere an dieses angespritzt sein und mithin integral mit ihm vorliegen.

Eine weitere Ausgestaltung der Erfindung sieht vor, dass das Faserverbundelement auf einer einem luftführenden Innenraum der Luftansaugleitung zugewandten Seite eine Innenbeschichtung und/oder auf einer dem Innenraum abgewandten Seite eine Außenbeschichtung aufweist. Mithilfe der Innenbeschichtung beziehungsweise der Außenbeschichtung kann die Luftdurchlässigkeit beziehungsweise der Durchlässigkeitsgrad des Faserverbundelements auf den gewünschten Wert eingestellt werden. Die Innenbeschichtung beziehungsweise die Außenbeschichtung liegt mithin bevorzugt als luftdichte Beschichtung oder zumindest teilweise luftdichte Beschichtung vor.

Eine Weiterbildung der Erfindung sieht vor, dass die Innenbeschichtung und/oder die Außenbeschichtung als Folie vorliegen/vorliegt. Unter der Folie wird ein dünnes Beschichtungselement verstanden, welches grundsätzlich aus einem beliebigen Material bestehen kann. Beispielsweise wird eine Kunststofffolie oder eine Metallfolie verwendet. Die Stärke der Folie ist dabei vorzugsweise derart gewählt, dass sie ohne weiteres verformbar ist, falls eine Kraftbeaufschlagung auftritt, wie sie insbesondere im Falle eines Aufpralls auf die Motorhaube gegeben ist.

Mithilfe der Innenbeschichtung beziehungsweise der Außenbeschichtung kann der Durchlässigkeitsgrad der Luftansaugleitung eingestellt werden, ohne jedoch die vorteilhaften Eigenschaften hinsichtlich des Fußgängerschutzes und/oder der Akustik zu beeinträchtigen. Bevorzugt ist das Faserverbundelement vollflächig mit der Innenbeschichtung und/oder der Außenbeschichtung versehen. Alternativ können selbstverständlich lediglich ein Bereich der Außenfläche des Faserverbundelements mit der Außenbeschichtung und/oder lediglich ein Bereich der Innenfläche des Faserverbundelements mit der Innenbeschichtung versehen sein.

Eine weitere vorteilhafte Ausgestaltung der Erfindung sieht vor, dass das Faserverbundelement als Kern einer Faserverbundanordnung vorliegt. Unter der Faserverbundanordnung wird eine Mehrschichtanordnung verstanden, deren Kern das Faserverbundelement bildet. Das Faserverbundelement beziehungsweise der Kern liegt insoweit als eine Schicht der Faserverbundanordnung vor. Insbesondere ist sie eine Innenschicht, welche beidseitig mit jeweils einer Außenschicht verbunden ist. Die Außenschicht beziehungsweise die Außenschichten können beispielsweise analog zu den vorstehenden Ausführungen hinsichtlich der Außenbeschichtung beziehungsweise der Folie ausgebildet sein. Die Faserverbundanordnung ist mithin bevorzugt in Sandwichbauweise hergestellt, liegt also als Sandwich-Faserverbundanordnung vor.

Eine weitere Ausgestaltung der Erfindung sieht vor, dass die Luftansaugleitung an der Motorhaube befestigt ist. Bedingt durch diese Befestigung kann die Luftansaugleitung zusammen mit der Motorhaube verlagerbar sein, insbesondere zwischen den vorstehend erläuterten Stellungen, nämlich der Offenstellung und der Geschlossenstellung. Dabei kann es vorgesehen sein, dass die Luftzuführeinrichtung ein Anschlussstück aufweist, welches motorraumfest angeordnet ist. Das Anschlussstück ist beispielsweise dem Saugrohr oder dem Luftfilter zugeordnet. Das Anschlussstück sowie die Auslassöffnung der Luftansaugleitung sind nun derart angeordnet, dass sie in der Geschlossenstellung der Motorhaube dichtend miteinander in Kontakt treten, sodass eine Strömungsverbindung zwischen dem Innenraum der Luftansaugleitung und einem Innenraum in dem Anschlussstück realisiert ist. Bei einer Verlagerung der Motorhaube aus der Geschlossenstellung heraus wird die Auslassöffnung der Luftansaugleitung von dem Anschlussstück entfernt, sodass die (unmittelbare) Strömungsverbindung zwischen ihnen unterbrochen ist.

Die Befestigung der Luftansaugleitung an der Motorhaube hat den Vorteil, dass der unter der Luftansaugleitung zur Verfügung stehende Bauraum in dem Motorraum vergrößert wird. Dabei ist die Luftansaugleitung in einem dem Fußgängerschutz dienenden Verformungsbereich angeordnet. Dieser Verformungsbereich dient der Aufnahme der Motorhaube im Falle einer Verformung aufgrund einer von außen einwirkenden Kraft, beispielsweise bei einem Unfall. Aufgrund der Ausgestaltung der Luftansaugleitung aus dem Faserverbundmaterial ist dies jedoch unproblematisch, weil die Luftansaugleitung bei dem Auftreten einer Verformungskraft ohne weiteres den Verformungsbereich für die Motorhaube freigibt.

Beispielsweise kann die Luftansaugleitung oder zumindest das Faserverbundelement mehrteilig ausgebildet sein und insoweit mindestens aus einem ersten Teilbereich und einem zweiten Teilbereich bestehen. Diese Teilbereiche sind beispielsweise derart ausgebildet, dass sie - im Querschnitt gesehen - den Innenraum jeweils nur bereichsweise umgreifen. Werden sie miteinander verbunden, so definieren sie gemeinsam den Innenraum. Besonders bevorzugt werden die Teilbereiche stoffschlüssig aneinander befestigt, insbesondere durch Verschweißen. Das Befestigen der Teilbereiche erfolgt dabei vorzugsweise derart, dass an der Verbindungsstelle der Teilbereiche eine Sollbruchstelle vorliegt. Diese kann derart ausgebildet sein, dass sie bei einer Kraftbeaufschlagung, wie sie bei einer Verformung der Motorhaube, insbesondere bei einem Unfall, auftritt, bricht, sodass die Teilbereiche zur Verlagerung gegeneinander freigegeben sind. Auf diese Art und Weise wird der Fußgängerschutz weiter verbessert.

In einer weiteren Ausgestaltung der Erfindung ist zur Befestigung der Luftansaugleitung wenigstens ein Dämpfungselement vorgesehen. Bevorzugt ist die Luftansaugleitung über das wenigstens eine Dämpfungselement, insbesondere ausschließlich über das wenigstens eine Dämpfungselement, befestigt. Die Befestigung erfolgt dabei beispielsweise an der Motorhaube oder an einem motorraumfest angeordneten Halter für die Luftansaugleitung. Das Dämpfungselement ist beispielsweise wenigstens bereichsweise elastisch ausgestaltet, sodass das Übertragen von Schwingungen von der Luftansaugleitung auf die Motorhaube oder den Halter und insoweit weitere Bereiche des Kraftfahrzeugs, vermieden wird. Entsprechend kann auf diese Art und Weise die Akustik des Kraftfahrzeugs weiter verbessert werden.

Eine Weiterbildung der Erfindung sieht vor, dass die Luftansaugleitung in einem dem Fußgängerschutz dienenden Verformungsbereich für die Motorhaube angeordnet ist. Der Verformungsbereich liegt beispielsweise unter der Motorhaube in dem Motorraum vor. Der Verformungsbereich dient der Aufnahme der Motorhaube, falls diese durch äußere Krafteinwirkung in Richtung des Motorraums beziehungsweise in diesen hineinverformt wird. Um einen ausreichenden Fußgängerschutz zu gewährleisten, ist es daher notwendig, den Verformungsbereich frei von Komponenten zu halten. Aufgrund der einfachen Verformbarkeit der Luftansaugleitung gemäß den vorstehenden Ausführungen ist es jedoch ohne weiteres möglich, sie in dem Verformungsbereich zu platzieren, ohne den Fußgängerschutz des Kraftfahrzeugs zu beeinträchtigen. Die Luftansaugleitung kann dabei gemäß den vorstehenden Ausführungen mehrteilig ausgebildet sein.

Eine vorteilhafte Ausgestaltung der Erfindung sieht vor, dass die Luftansaugleitung wenigstens bereichsweise in die Motorhaube integriert ist. Vorstehend wurde bereits erläutert, dass die Luftansaugleitung an der Motorhaube befestigt sein kann. Darüber hinausgehend ist nun eine Integration in die Motorhaube vorgesehen, sodass die Luftansaugleitung wenigstens bereichsweise in ihr vorliegt.

Dabei kann es vorgesehen sein, dass die Motorhaube eine Tragstruktur und eine außenseitig auf der Tragstruktur angeordnete Außenhaut aufweist, wobei die Luftansaugleitung wenigstens bereichsweise in der Tragstruktur angeordnet und/oder von der Außenhaut und/oder einem Anbauteil der Motorhaube gebildet ist. Die Außenhaut ist auf der Tragstruktur befestigt und dient dem Abdecken des Motorraums, sodass ein gefälliger optischer Eindruck des Kraftfahrzeugs erzielt wird. Die Tragstruktur weist beispielsweise einen Rahmen und vorzugsweise wenigstens eine Verstärkungsstrebe auf und dient dem Halten der Außenhaut, um die Formstabilität der Außenhaut sicher zu gewährleisten. Sowohl die Außenhaut als auch die Tragstruktur sind jedoch vorzugsweise derart ausgebildet, dass sie beim Auftreten einer äußeren Kraft, wie sie durch einen Unfall verursacht wird, verformbar sind. Dabei ist es beispielsweise vorgesehen, dass die Tragstruktur und/oder die Außenhaut in den vorstehend beschriebenen Verformungsbereich ausweichen können.

Im Rahmen der bereits erläuterten Integration der Luftansaugleitung in die Motorhaube ist erstere wenigstens bereichsweise in der Tragstruktur angeordnet. Zusätzlich oder alternativ kann die Luftansaugleitung auch von der Außenhaut beziehungsweise dem Anbauteil bereichsweise gebildet sein. In diesem Fall wird der Innenraum beispielsweise zumindest auf einer Seite von der Außenhaut oder dem Anbauteil begrenzt. In diesem Fall kann es vorgesehen sein, dass das Faserverbundmaterial unmittelbar an die Außenhaut beziehungsweise das Anbauteil anschließt, um auch die weiteren Seiten des Innenraums - im Querschnitt bezüglich der Längsmittelachse gesehen - zu begrenzen. Unter dem Anbauteil ist ein Bauteil zu verstehen, welches an der Tragstruktur befestigt ist und vorzugsweise von der Außenhaut beabstandet vorliegt.

Schließlich ist vorgesehen, dass das Faserverbundmaterial als Matrix ein Thermoplastmaterial aufweist, insbesondere als LWRT-Material vorliegt. Bereits vorstehend wurde erläutert, dass grundsätzlich verschiedene Materialien für die Matrix geeignet sind. Erfindungsgemäß wird ein Thermoplastmaterial verwendet. In die Matrix sind die Fasern des Faserverbundmaterials eingebettet. Die Fasern können dabei in beliebiger Form vorliegen, beispielsweise als Vliesstoff. Die Fasern können aus beliebigem Material bestehen. Bevorzugt werden jedoch Glasfasern, Kohlenstofffasern, Keramikfasern, Aramidfasern, Stahlfasern, Nylonfasern oder dergleichen verwendet.

Beispielsweise wird als Faserverbundmaterial ein LWRT-Material verwendet, wobei LWRT für ein Light-Weight Reinforced Thermoplastics, also ein leichtes, verstärktes Thermoplast steht.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Schnittdarstellung eines Kraftfahrzeugs, wobei ein Motorraum sowie eine zu dessen Verschließen vorgesehene Motorhaube dargestellt sind, und
- Figur 2: eine Ansicht einer Tragstruktur der Motorhaube von unten, wobei eine wenigstens bereichsweise in der Tragstruktur angeordnete Luftansaugleitung zu erkennen ist.

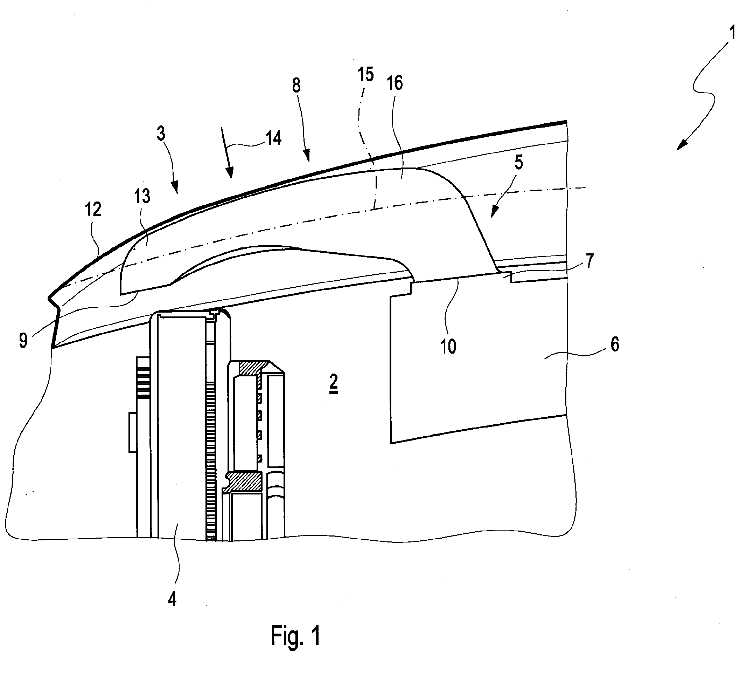

Die Figur 1 zeigt eine Seitenschnittdarstellung eines Bereichs eines Kraftfahrzeugs 1. Dabei sind insbesondere ein Motorraum 2 sowie eine diesen nach oben begrenzende Motorhaube 3 dargestellt. In dem Motorraum 2 ist beispielsweise ein Kühler 4 angeordnet. Auch weitere Aggregate des Kraftfahrzeugs 1 können in dem Motorraum 2 vorgesehen sein. Insbesondere ist in dem Motorraum 2 ein hier nicht dargestelltes Antriebsaggregat, beispielsweise eine Brennkraftmaschine, vorgesehen. Zur Versorgung der Brennkraftmaschine mit Luft, insbesondere Frischluft, ist eine Luftzuführeinrichtung 5 vorgesehen, welche einen Luftfilter 6 mit einem hier verdeckten Anschlussstück 7 aufweist.

Weiterhin verfügt die Luftzuführeinrichtung 5 über eine Luftansaugleitung 8. Diese weist eine Einlassöffnung 9 und eine Auslassöffnung 10 auf. Es ist nun vorgesehen, dass die Auslassöffnung 10 in einer Geschlossenstellung der Motorhaube 3 derart an dem Anschlussstück 7 anliegt, dass eine dichte Strömungsverbindung zwischen einem Innenraum der Luftansaugleitung 8 und einem Strömungskanal des Anschlussstücks 7 vorliegt. Die Einlassöffnung 9 ist beispielsweise in Fahrtrichtung beziehungsweise in Längsrichtung des Kraftfahrzeugs 1 zumindest teilweise, insbesondere vollständig, vor dem Kühler 4 angeordnet.

Die Motorhaube 3 weist eine hier nicht gesondert dargestellte Tragstruktur 11 sowie eine Außenhaut 12 auf. In dem Motorraum 2 liegt nun ein Verformungsbereich 13 vor, in welchen die Tragstruktur 11 und/oder die Außenhaut 12 zurückweichen kann, sofern eine von außen wirkende Kraft (Pfeil 14) auf die Motorhaube 3 einwirkt. Eine derartige Kraft kann beispielsweise aufgrund eines Unfalls, insbesondere mit einem Fußgänger, auftreten. Der Verformungsbereich 13 dient insoweit dem Fußgängerschutz, weil er ein Verformen der Motorhaube 3 zulässt. Eine Grenzlinie 15 deutet denjenigen Bereich an, oberhalb von welchem bevorzugt keine starren Elemente angeordnet sind, um diese Verformung in den Verformungsbereich 13 hinein zuzulassen.

Es ist nun jedoch vorgesehen, dass die Luftansaugleitung 8 wenigstens bereichsweise in diesem Verformungsbereich 13 angeordnet ist. Dies wird ermöglicht durch eine spezielle Ausgestaltung der Luftansaugleitung 8. Es ist nämlich vorgesehen, dass diese ein Faserverbundelement 16 aus einem luftdurchlässigen Faserverbundmaterial aufweist und insoweit flexibel ist. Das Faserverbundelement 16 umgibt bevorzugt den luftführenden Innenraum der Luftansaugleitung 8 beziehungsweise umgreift ihn. Auf der dem Innenraum zugewandten Seite des Faserverbundelements 16 ist zudem eine hier nicht zu erkennende Innenbeschichtung vorgesehen, mittels welcher die Luftdurchlässigkeit beziehungsweise der Durchlässigkeitsgrad der Luftansaugleitung 8 eingestellt werden kann.

Zudem verfügt die Innenbeschichtung üblicherweise über eine glattere Oberfläche als das Faserverbundmaterial, sodass zusätzlich der Strömungswiderstand durch die Luftansaugleitung 8 verringert werden kann. Entsprechend wird der Druckverlust der Luftansaugleitung 8 reduziert. Bevorzugt ist die Innenbeschichtung vollflächig auf einer Innenfläche des Faserverbundelements 16 aufgebracht. Alternativ kann das Faserverbundelement 16 selbstverständlich auch als Kern einer Faserverbundanordnung vorliegen, welche beispielsweise als Sandwich-Faserverbundanordnung ausgebildet ist. Als Matrix des Faserverbundmaterials ist besonders bevorzugt ein Thermoplastmaterial vorgesehen.

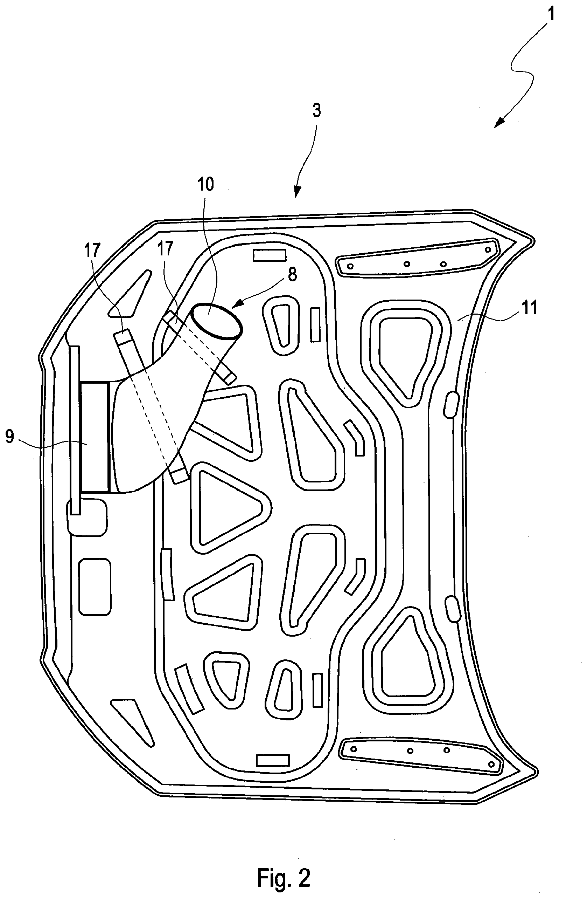

Die Figur 2 zeigt nun die Tragstruktur 11 der Motorhaube 3 in einer Ansicht von unten. Es ist deutlich erkennbar, dass die Luftansaugleitung mithilfe wenigstens eines Befestigungselements 17 (hier: zwei Befestigungselemente 17) an der Motorhaube 3 beziehungsweise deren Tragstruktur 11 befestigt ist. Das wenigstens eine Befestigungselement ist dabei bevorzugt als Dämpfungselement ausgestaltet beziehungsweise weist ein solches auf. Das Dämpfungselement ist derart ausgestaltet, dass Schwingungen der Luftansaugleitung 8 nicht oder lediglich in stark abgeschwächter Form auf die Motorhaube 3 beziehungsweise das Kraftfahrzeug 1 übertragen werden. Auf diese Art und Weise wird die Akustik des Kraftfahrzeugs 1 deutlich verbessert.

Es ist zudem zu erkennen, dass die Luftansaugleitung 8 sowohl die Einlassöffnung 9 als auch die Auslassöffnung 10 auf ihrer Unterseite aufweist. Durch die so ausgerichtete Auslassöffnung 10 wird sichergestellt, dass die Strömungsverbindung zu dem Anschlussstück 7, welches beispielsweise dem Luftfilter 6 zugeordnet ist, in der Geschlossenstellung der Motorhaube 3 realisiert ist.

### BEZUGSZEICHENLISTE

- 1: Kraftfahrzeug
- 2: Motorraum
- 3: Motorhaube
- 4: Kühler
- 5: Luftzufuhreinrichtung
- 6: Luftfilter
- 7: Anschlussstück
- 8: Luftansaugleitung
- 9: Einlassöffnung
- 10: Auslassöffnung
- 11: Tragstruktur
- 12: Außenhaut
- 13: Verformungsbereich
- 14: Pfeil
- 15: Grenzlinie
- 16: Faserverbundelement
- 17: Befestigungselement

## Patentansprüche

1. Kraftfahrzeug (1) mit einem mittels einer Motorhaube (3) verschließbaren Motorraum (2), in dem eine über einen Luftfilter (6) mittelbar an ein Saugrohr einer Brennkraftmaschine strömungstechnisch angeschlossene Luftansaugleitung (8) angeordnet ist, die sich von einer Einlassöffnung bis zu einer Auslassöffnung erstreckt, wobei die Luftansaugleitung (8) in einem dem Fußgängerschutz dienenden Verformungsbereich (13) für die Motorhaube (3) angeordnet ist, **dadurch gekennzeichnet, dass** die Luftansaugleitung (8) ein Faserverbundelement (16) aus einem luftdurchlässigen, ein Thermoplastmaterial als Matrix aufweisenden Faserverbundmaterial sowie an ihrer Einlassöffnung oder ihrer Auslassöffnung eine an dem Faserverbundelement (16) befestigte Dichtung aufweist, wobei entlang der Luftansaugleitung (8) Luft durch das Faserverbundelement (16) in einen luftführenden Innenraum der Luftansaugleitung (8) eintreten kann, sodass auch bei verstopfter Einlassöffnung Luft durch die Auslassöffnung austreten kann.

2. Kraftfahrzeug nach Anspruch 1, **dadurch gekennzeichnet, dass** das Faserverbundelement (16) auf einer einem luftführenden Innenraum der Luftansaugleitung (8) zugewandten Seite eine Innenbeschichtung und/oder auf einer dem Innenraum abgewandten Seite eine Außenbeschichtung aufweist.

3. Kraftfahrzeug nach Anspruch 2, **dadurch gekennzeichnet, dass** die Innenbeschichtung und/oder die Außenbeschichtung als Folie vorliegen.

4. Kraftfahrzeug nach einem der vorhergehenden Ansprüche, **dadurch gekennzeichnet, dass** das Faserverbundelement (16) als Kern einer Faserverbundanordnung vorliegt.

5. Kraftfahrzeug nach einem der vorhergehenden Ansprüche, **dadurch gekennzeichnet, dass** die Luftansaugleitung (8) an der Motorhaube (3) befestigt ist.

6. Kraftfahrzeug nach einem der vorhergehenden Ansprüche, **dadurch gekennzeichnet, dass** zur Befestigung der Luftansaugleitung (8) wenigstens ein Dämpfungselement vorgesehen ist.

7. Kraftfahrzeug nach einem der vorhergehenden Ansprüche, **dadurch gekennzeichnet, dass** die Luftansaugleitung (8) wenigstens bereichsweise in die Motorhaube (3) integriert ist.

8. Kraftfahrzeug nach einem der vorhergehenden Ansprüche, **dadurch gekennzeichnet, dass** die Motorhaube (3) eine Tragstruktur (11) und eine außenseitig auf der Tragstruktur (11) angeordnete Außenhaut (12) aufweist, wobei die Luftansaugleitung (8) wenigstens bereichsweise in der Tragstruktur (11) angeordnet und/oder von der Außenhaut (12) und/oder einem Anbauteil der Motorhaube (3) gebildet ist.

## Claims

1. Motor vehicle (1) having an engine compartment (2) which can be closed by means of a hood (3), and in which an air intake line (8) indirectly fluidically connected to an intake manifold of an internal combustion engine via an air filter (6) is arranged, said air intake line (8) extending from an inlet opening to an outlet opening, wherein the air intake line (8) is arranged in a deformation region (13) for the hood (3) serving as pedestrian protection, **characterised in that** the air intake line (8) has a fibre composite element (16) made of an air-permeable fibre composite material having a thermoplastic material as matrix as well as a sealing fastened to the fibre composite element (16) at the inlet opening or outlet opening thereof, wherein along the air intake line (8) air can enter through the fibre composite element (16) into an air-ducting internal space of the air intake line (8) so that in the event of a blocked inlet opening air can exit through the outlet line.

2. Motor vehicle according to claim 1, **characterised in that** the fibre composite element (16) has an inner coating on a side facing an air-ducting internal space of the air intake line (8) and/or an outer coating on a side facing away from the internal space.

3. Motor vehicle according to claim 2, **characterised in that** the inner coating and/or the outer coating is configured as a film.

4. Motor vehicle according to any one of the preceding claims, **characterised in that** the fibre composite element (16) is a core of a fibre composite arrangement.

5. Motor vehicle according to any one of the preceding claims, **characterised in that** the air intake line (8) is fastened to the hood (3).

6. Motor vehicle according to any one of the preceding claims **characterised in that** at least one damping element is provided for fastening the air intake line (8).

7. Motor vehicle according to any one of the preceding claims **characterised in that** the air intake line (8) at least in portions is integrated into the hood (3).

8. Motor vehicle according to any one of the preceding claims, **characterised in that** the hood (3) has a support structure (11) and an outer panel (12) arranged on the outside surface of the support structure (11), wherein the air intake line (8) at least in portions is arranged in the support structure (11) and/or is formed by the outer panel (12) and/or a mounted part of the hood (3).

## Revendications

1. Véhicule automobile (1) comprenant un espace moteur (2) qui peut être fermé par un capot de moteur (3) et dans lequel est agencée une conduite d'aspiration d'air (8) raccordée en technique de communication fluidique via un filtre à air (6) directement sur un tuyau d'aspiration d'un moteur à combustion interne, laquelle conduite s'étend d'une ouverture d'entrée à une ouverture de sortie, dans lequel la conduite d'aspiration d'air (8) est agencée dans une zone de déformation (13) servant à la protection des piétons pour le capot de moteur (3), **caractérisé en ce que** la conduite d'aspiration d'air (8) présente un élément composite (16) renforcé par des fibres formé d'un matériau composite renforcé par des fibres perméable à l'air présentant comme matrice un matériau thermoplastique ainsi qu'un joint étanche fixé à l'élément composite (16) renforcé par des fibres sur son ouverture d'entrée ou son ouverture de sortie, dans lequel, le long de la conduite d'aspiration d'air (8), de l'air peut pénétrer à travers l'élément composite (16) renforcé par des fibres dans un espace interne de la conduite d'aspiration d'air (8), de sorte que de l'air puisse pénétrer également par l'ouverture de sortie lorsque l'ouverture d'entrée est obstruée.

2. Véhicule automobile selon la revendication 1, **caractérisé en ce que** l'élément composite (16) renforcé par des fibres présente un revêtement interne sur un côté tourné vers un espace interne guidant l'air de la conduite d'aspiration d'air (8) et/ou un revêtement externe sur le côté opposé à l'espace interne.

3. Véhicule automobile selon la revendication 2, **caractérisé en ce que** le revêtement interne et/ou le revêtement externe se présente(nt) sous la forme d'un film.

4. Véhicule automobile selon l'une quelconque des revendications précédentes, **caractérisé en ce que** l'élément composite (16) renforcé par des fibres se présente sous la forme d'un noyau d'un agencement composite renforcé par des fibres.

5. Véhicule automobile selon l'une quelconque des revendications précédentes, **caractérisé en ce que** la conduite d'aspiration d'air (8) est fixée au capot de moteur (3).

6. Véhicule automobile selon l'une quelconque des revendications précédentes, **caractérisé en ce qu'**il est prévu au moins un élément d'amortissement pour la fixation de la conduite d'aspiration d'air (8).

7. Véhicule automobile selon l'une quelconque des revendications précédentes, **caractérisé en ce que** la conduite d'aspiration d'air (8) est intégrée au moins par zones au capot de moteur (3).

8. Véhicule automobile selon l'une quelconque des revendications précédentes, **caractérisé en ce que** le capot de moteur (3) présente une structure porteuse (11) et une peau externe (12) agencée côté extérieur sur la structure porteuse (11), dans lequel la conduite d'aspiration d'air (8) est agencée au moins par zones dans la structure porteuse (11) et/ou est formée par la peau externe (12) et/ou une pièce rapportée du capot de moteur (3).
